# EUROPÄISCHE PATENTANMELDUNG

(11) **EP 3 415 487 A1**
(43) Veröffentlichungstag der Anmeldung: **19.12.2018**
(21) Anmeldenummer: 18177199.9
(22) Anmeldetag: 12.06.2018
(51) Int. Cl.: C05B 1/06, C05D 9/02, C05D 3/02, C05D 9/00, C05G 1/00, C05G 3/02

(54) **DÜNGEMITTEL MIT ROHPHOSPHAT UND ELEMENTARSCHWEFEL**

(30) Priorität: 13.06.2017 DE 202017103512 U
(71) Anmelder: Lagerhaus Eichinger GmbH & Co. KG, 84367 Tann Bayern (DE)
(72) Erfinder: AUER, Siegfried, 84367 Tann, (DE)
(74) Vertreter: Lichtnecker, Markus Christoph

(57) **Zusammenfassung**

Die Erfindung betrifft ein Düngemittel, umfassend Elementarschwefel und Rohphosphat.

## Beschreibung

Die Erfindung betrifft ein Düngemittel, welches Elementarschwefel enthält.

Schwefel ist in der heutigen Zeit als Luftschadstoff nahezu vollständig bedeutungslos geworden. Eine Pflanze benötigt zum Wachstum jedoch unter anderem auch Schwefel, welcher über die Umwelt nur zu einem zu geringen Anteil in die Ackerflächen eingetragen wird. Wenn der Pflanze jedoch nicht ausreichend Schwefel zur Verfügung steht, führt dies zu Mangelerscheinungen und Stoffwechselstörungen.

Schwefel gewinnt daher als über den Dünger beizugebendes Nährelement immer mehr an Bedeutung.

Aus DE 20 2015 105 252 U1 ist ein Düngemittel bekannt, das neben wasserlöslichem Schwefel auch Elementarschwefel aufweist. Auf diese Weise kann mit einer einzigen Düngung von Beginn bis zum Ende einer Vegetationsperiode pflanzenverwertbarer Schwefel bereitgestellt werden.

Der wasserlösliche Schwefel versorgt die Pflanze etwa bis zur Mitte der Vegetationsperiode mit Schwefel. Der wasserlösliche Schwefel kann sich nicht in der Bodenkrume halten und wird ausgewaschen.

Der Elementarschwefel stellt hingegen von etwa zwei Wochen nach Ausbringung bis zum Ende der Vegetationsperiode Schwefel bereit. Der Elementarschwefel versorgt somit die Pflanze mit Schwefel, auch wenn der ursprünglich im Düngemittel vorhandene wasserlösliche Schwefel verbraucht bzw. ausgewaschen ist. Ein erneutes Düngen mit wasserlöslichem Schwefel ist nicht erforderlich. Die Pflanze wird folglich über die gesamte Vegetationsperiode mit Schwefel versorgt, wobei ein einziges Düngen ausreichend ist.

Der Elementarschwefel kann zu wasserlöslichem Schwefel umgewandelt werden. Der Elementarschwefel spielt eine zentrale Rolle für Stoffwechselprozesse, insbesondere Energiestoffwechsel, einiger Bakterien. Schwefeloxidierende Bakterien oxidieren den Elementarschwefel zu Schwefelsulfat. Viele dieser Mikroorganismen können Elementarschwefel in Form von Kugeln intrazellulär und als Reserve für Perioden knapper Schwefelversorgung einlagern. Ist der Elementarschwefel zu wasserlöslichem Schwefel umgewandelt, so kann dieser wieder gut von der Pflanze aufgenommen und verwertet werden.

Der nicht-wasserlösliche Elementarschwefel bildet im Boden also zunächst einen Vorrat an Schwefel, welcher nicht ausgewaschen wird. Erst nach und nach wird der Elementarschwefel in den wasserlöslichen Schwefel umgewandelt und direkt von der Pflanze aufgenommen, sodass Auswaschungen zumindest im Wesentlichen unterbunden werden.

Bei DE 20 2015 105 252 U1 wird als stabilisierter Stickstoff ein Harnstoff-Dünger mit Nitrifikationshemmstoff verwendet. Dieser wirkt sicher und unabhängig vom Wetter, sodass die Pflanze auch bei hohen Niederschlägen nach der Düngung vor Auswaschungen geschützt ist.

Kalk ist ein wichtiger Bestandteil eines gesunden Bodens. Gerade auch durch die immer enger werdenden Fruchtfolgen ist die Düngung mit Kalk wichtig, um eine hohe Qualität der Pflanzen sowie hohe Erträge sicherzustellen.

Vor allem für kalkliebende Pflanzen, beispielweise für Braugerste, ist eine Düngung mit Kalk erforderlich.

Kalk ist im Harnstoff-Dünger jedoch nicht enthalten, sodass der Boden zusätzlich mit Kalk gedüngt werden muss. Dies macht einen zusätzlichen Arbeitsschritt erforderlich.

Normaler Kalk, beispielsweise Stein- oder Branntkalk, wirkt nur langsam auf den Boden. Der pH-Wert kann daher nur langsam angepasst werden.

Bio-Produkte gewinnen immer mehr an Bedeutung. Jedoch müssen auch Bio-Pflanzen, beispielsweise mit Phosphat, gedüngt werden, damit keine Mangelerscheinungen auftreten.

Bei herkömmlichen Pflanzen wird beispielsweise mit Diammoniumphosphat gedüngt. Dies ist jedoch nicht bio-geeignet.

Es ist daher eine Aufgabe der Erfindung, ein bio-geeignetes Düngemittel zu schaffen.

Die Lösung dieser Aufgabe erfolgt durch Düngemittel mit den Merkmalen des Anspruchs 1.

Erfindungsgemäß umfasst das Düngemittel Elementarschwefel, also Schwefel mit der Oxidationsstufe Null (S0). Der Elementarschwefel ist insbesondere wasserunlöslich und wird somit nicht ausgewaschen.

Das Düngemittel kann einen Elementarschwefel-Dünger umfassen, der den Elementarschwefel aufweist. Der Korndurchmesser des Elementarschwefel-Düngers kann im Mittel zwischen etwa 2 mm und 4 mm liegen.

Der Elementarschwefel-Dünger kann ausschließlich aus Elementarschwefel bestehen oder weitere Zusätze umfassen.

Beispielsweise kann der Elementarschwefel-Dünger zwischen 85 % und 95 %, insbesondere 90 %, Elementarschwefel umfassen.

Ein granulierter Elementarschwefel-Dünger mit 90 % Elementarschwefel ist z.B. als Sulfogran® 90 oder Wigor® S im Markt bekannt. Die Elementarschwefel-Dünger unterscheiden sich beispielweise in der Mahlfeinheit bzw. der Verfügbarkeit für Mikroorganismen.

Das Düngemittel ist für den Ackerbau, insbesondere für Pflanzen wie Mais, Kartoffeln, Salat, Cruciferen wie z.B. Raps, Kohl oder dergleichen geeignet. Auch für Getreide ist das Düngemittel vorteilhaft, da der Schwefel die Kornzahl, also die Fruchtbarkeit, ebenso wie die Backqualität, z.B. gemessen am Sedimentationswert, günstig beeinflusst.

Das Düngemittel umfasst neben dem Elementarschwefel auch Rohphosphat.

Nach einer Ausführungsform kann das Düngemittel Meerkalk, insbesondere Korallen-, Algen- und/oder Muschelkalk, aufweisen. Meerkalk wirkt insbesondere schnell.

Die Kreide, aus der der Meerkalk gewonnen wird, kann beispielsweise aus Ablagerungen von Kalkalgen entstanden sein.

Meerkalk ist deutlich reaktiver als beispielsweise Stein- oder Branntkalk, welche vor dem Ausbringen gemahlen werden müssen, um überhaupt von Mikroorganismen aufgenommen werden zu können. Dadurch ist Meerkalk auch ohne Zerkleinerung schneller wirksam. Auch die Aufnahme von anderen Nährstoffen wird durch Meerkalk verbessert. Zudem ist Meerkalk bio-geeignet.

Meerkalk liegt vorzugsweise in gekörnter Form vor und kann somit gut mit anderen Bestandteilen des Düngemittels gemischt werden.

Das Düngemittel kann einen Meerkalk-Dünger umfassen, der den Meerkalk aufweist. Der Meerkalk-Dünger kann ausschließlich aus Meerkalk bestehen oder weitere Zusätze, beispielsweise Elementarschwefel, Calciumcarbonat und/oder Magnesiumcarbonat, umfassen. So kann der Meerkalk-Dünger beispielsweise 82 % Calciumcarbonat (CaCO3), 1,3 % Magnesiumcarbonat (MgCO3) und 9 % Elementarschwefel umfassen.

Auch eine Zusammensetzung mit 92 % Calciumcarbonat und 1,5 % Magnesiumcarbonat ist denkbar.

Alternativ kann der Meerkalk-Dünger beispielsweise zwischen 0,1 % und 2 %, vorzugsweise 0,6 %, Magnesium und zwischen 40 % und 60 %, vorzugweise 52 %, Calciumoxid aufweisen.

Insbesondere kann der Anteil des Meerkalks im Düngemittel zwischen 5 % und 80 %, vorzugsweise zwischen 10 % und 20 %, betragen.

Da Meerkalk sehr reaktiv ist, kann der pH-Wert des Bodens schnell angepasst werden. Dies ist vor allem für kalkliebende Pflanzen vorteilhaft.

Das Düngemittel ist multifunktional, da es den Boden mit verschiedenen wichtigen Nährstoffen versorgt.

Erfindungsgemäß weist das Düngemittel Rohphosphat auf. Rohphosphat ist bio-geeignet. Das Rohphosphat ist insbesondere weicherdig und kann mineralsäurelösliches Phosphorpentoxid (P2O5) umfassen.

Das Düngemittel kann einen Rohphosphat-Dünger umfassen, der das Rohphosphat aufweist. Der Rohphosphat-Dünger kann ausschließlich aus Rohphosphat bestehen oder weitere Zusätze, beispielsweise Calcium, insbesondere CaCO3, Magnesium, insbesondere MgO, Aminopurine und/oder Selen, umfassen.

So kann der Rohphosphat-Dünger beispielsweise 26 % Phosphat, 1,2 % Magnesium, 40 % Calciumoxid und 0,5 % Natrium aufweisen. Dies ist auch als Hyperkorn P26 am Markt bekannt.

Als Naturphosphat P26 ist auch ein Rohphosphat-Dünger mit 26 % mineralsäurelöslichem Phosphorpentoxid (P2O5) bekannt.

Als Litho Physalg® G18 ist ferner ein Rohphosphat-Dünger mit P2O5, CaCO3, MgO und Aminopurine bekannt.

Zudem ist als DOLOPHOS® 26 ein Rohphosphat-Dünger mit 26 % P2O5, 40 % CaO und 2 % MgO bekannt.

DOLOPHOS® 15 enthält beispielswiese 15 % weicherdiges Rohphosphat (P2O5), 65 % Calciumcarbonat (CaCO3) sowie 15 % Magnesiumcarbonat (MgCO3).

Der Anteil des Rohphosphat-Düngers im Düngemittel kann zwischen 4 % und 70 %, insbesondere zwischen 7 % und 65 %, betragen.

Neben Elementarschwefel und einem Rohphosphat-Dünger kann das Düngemittel auch weitere Bestandteile aufweisen, z.B. Meerkalk. Alternativ kann das Düngemittel auch lediglich aus Elementarschwefel und einem Rohphosphat-Dünger bestehen.

Das Düngemittel ist multifunktional, da es den Boden mit verschiedenen wichtigen Nährstoffen versorgt.

Der Rohphosphat-Dünger kann als Granulat vorliegen und lässt sich somit gut mit anderen Bestandteilen des Düngemittels mischen. Für ein bio-geeignetes Düngemittel werden dabei ausschließlich bio-geeignete Bestandteile, beispielsweise Elementarschwefel und/oder Meerkalk, miteinander vermischt.

Insbesondere kann das Düngemittel wasserlöslichen Schwefel, vorzugsweise Schwefelsulfat oder Schwefeltrioxid, umfassen.

Wasserlöslicher Schwefel hat den Vorteil, dass der Schwefel in dieser Form gut von der Pflanze aufgenommen werden kann. Eine vorherige Umwandlung, z.B. durch Mikroorganismen, ist nicht notwendig. Der wasserlösliche Schwefel steht der Pflanze somit sofort nach dem Düngen zur Aufnahme zur Verfügung.

Vorzugsweise wird das Düngemittel im Spätsommer bzw. Herbst, z.B. im August, ausgetragen.

Weiterbildungen der Erfindung sind auch den abhängigen Ansprüchen sowie der Beschreibung zu entnehmen.

Gemäß einer Ausführungsform umfasst das Düngemittel einen Stickstoff-Dünger, einen Magnesium-Dünger, einen Phosphat-Dünger, einen Kali-Dünger und/oder einen Phosphat-Kali-Dünger.

Insbesondere kann erfindungsgemäß ein Stickstoff-Dünger, welcher auch N-Dünger genannt wird, mit einem Elementarschwefel-Dünger und Rohphosphat kombiniert werden. Ein Stickstoff-Dünger ist jedoch nicht zwingend erforderlich. So kann der Stickstoff beispielsweise auch über Gülle zugeführt werden.

Da Schwefel ebenso wie Stickstoff einen zentralen Baustein in Proteinen darstellt und auch für die Nitratreduktase in der Pflanze verantwortlich ist, kann der Stickstoff bei einem Schwefelmangel von der Pflanze nicht mehr verwertet werden. Um also eine effiziente Stickstoffdüngung sicherstellen zu können, ist es vorteilhalft, diese mit einer bedarfsgerechten Schwefeldüngung zu verbinden.

Der Stickstoff-Dünger kann lediglich Stickstoff oder auch Zusätze umfassen. Der Korndurchmesser des Stickstoff-Düngers kann im Mittel zwischen etwa 2 mm und 4 mm liegen.

Vorzugsweise weist der Stickstoff-Dünger wasserlöslichen Schwefel auf. Durch eine Kombination eines derartigen Stickstoff-Düngers mit einem Elementarschwefel-Dünger können sowohl wasserlöslicher Schwefel als auch der Elementarschwefel bereitgestellt werden.

Gemäß einer weiteren Ausführungsform umfasst der Stickstoff-Dünger schwefelsaures Ammoniak (SSA) bzw. er besteht daraus. Im schwefelsauren Ammoniak ist Ammoniumstickstoff enthalten, welcher z.B. im Vergleich zu Nitratstickstoff einer geringeren Auswaschung unterliegt. Das erfindungsgemäße Düngemittel kann somit schwefelsaures Ammoniak, Elementarschwefel und Rohphosphat umfassen oder daraus bestehen.

Nach einer weiteren Ausführungsform umfasst das schwefelsaure Ammoniak zwischen 19 % und 23 %, insbesondere 21 %, Ammoniumstickstoff und zwischen 22 % und 26 %, insbesondere 24 %, wasserlöslichen Schwefel. Dies sind typische Werte für schwefelsauren Ammoniak.

Gemäß einer weiteren Ausführungsform umfasst der Stickstoff-Dünger Ammoniumsulfat-Harnstoff bzw. er besteht daraus. Dies führt zu einer guten Düngewirkung und erhöht den Ertrag. Das erfindungsgemäße Düngemittel kann somit Ammoniumsulfat-Harnstoff, Elementarschwefel und Rohphosphat umfassen oder daraus bestehen.

Vorzugsweise umfasst der Ammoniumsulfat-Harnstoff zwischen 31 % und 35 %, insbesondere 33 %, Gesamtstickstoff und zwischen 10 % und 14 %, insbesondere 12 %, wasserlöslichen Schwefel.

Der Ammoniumsulfat-Harnstoff kann zwischen 20 % und 24 %, insbesondere 22,6 %, Carbamidstickstoff und zwischen 8 % und 12 %, insbesondere 10,4 %, Ammoniumstickstoff umfassen. Eine Zusammensetzung aus 22,6 % Carbamidstickstoff und 10,4 % Ammoniumstickstoff ergibt hierbei die 33 % Gesamtstickstoff. Ein derartiger Ammoniumsulfat-Harnstoff mit 12 % wasserlöslichem Schwefel ist auch als Piammon® bekannt.

Alternativ oder zusätzlich zu einem Stickstoff-Dünger kann das Düngemittel auch einen Magnesium-Dünger umfassen. Der Magnesium-Dünger kann ausschließlich Magnesium umfassen oder Zusätze aufweisen.

Insbesondere weist der Magnesium-Dünger wasserlöslichen Schwefel auf. Durch eine Kombination eines derartigen Magnesium-Düngers mit einem Elementarschwefel-Dünger können somit sowohl wasserlöslicher Schwefel als auch der Elementarschwefel bereitgestellt werden.

Gemäß einer weiteren Ausführungsform umfasst der Magnesium-Dünger zwischen 15 % und 30 %, insbesondere 25 %, Magnesiumoxid und zwischen 10 % und 25 %, insbesondere 20 %, wasserlöslichen Schwefel. Ein derartiger Magnesium-Dünger mit 25 % wasserlöslichem Magnesiumoxid und 20 % wasserlöslichem Schwefel ist auch als Kieserit bekannt. Kieserit ist bio-geeignet.

Der Anteil an Kieserit im Düngemittel kann zwischen 3 % und 25 %, insbesondere zwischen 5 % und 20 %, betragen.

Alternativ oder zusätzlich zu einem Stickstoff-Dünger oder Magnesium-Dünger kann das Düngemittel auch einen Phosphat-Dünger umfassen. Der Phosphat-Dünger kann ausschließlich Phosphat umfassen oder Zusätze aufweisen.

Phosphat nimmt eine zentrale Rolle beim Stoffwechsel von Pflanzen ein.

Der Phosphat-Dünger kann wasserlöslichen Schwefel aufweisen. Durch eine Kombination eines derartigen Phosphat-Düngers mit einem Elementarschwefel-Dünger können somit sowohl wasserlöslicher Schwefel als auch der Elementarschwefel bereitgestellt werden.

Nach einer weiteren Ausführungsform umfasst der Phosphat-Dünger zwischen 3 % und 15 %, insbesondere 9 %, wasserlöslichen Schwefel.

Alternativ oder zusätzlich zu einem Stickstoff-Dünger, Magnesium-Dünger oder Phosphat-Dünger kann das Düngemittel auch einen Kali-Dünger umfassen. Der Kali-Dünger kann ausschließlich Kalium umfassen oder Zusätze aufweisen.

Insbesondere weist der Kali-Dünger wasserlöslichen Schwefel auf. Durch eine Kombination eines derartigen Kali-Düngers mit einem Elementarschwefel-Dünger können somit sowohl wasserlöslicher Schwefel als auch der Elementarschwefel bereitgestellt werden.

Gemäß einer weiteren Ausführungsform umfasst der Kali-Dünger zwischen 3 % und 25 %, insbesondere zwischen 10 % und 20 %, vorzugsweise 12,5 % oder 17 %, wasserlöslichen Schwefel.

Ein Kali-Dünger mit 40 % Kaliumoxid und 12,5 % Schwefeltrioxid bzw. 4 % wasserlöslichem Schwefel ist auch als Korn-Kali® bekannt.

Auch kann ein Kali-Dünger beispielsweise 50 % Kalium und 17 % Sulfat aufweisen.

Der Anteil an Kali-Dünger im Düngemittel kann - falls überhaupt vorhanden - zwischen 10 % und 40 %, insbesondere zwischen 20 % und 30 %, vorzugsweise 24 %, betragen.

Insbesondere ist der Kali-Dünger chloridfrei oder enthält maximal 1 % Chlorid. Der Kali-Dünger ist somit frei von Chlorid bzw. er enthält lediglich Spuren davon. Kalium kann somit auch für chloridempfindliche Pflanzen, beispielsweise Gemüse, insbesondere Kartoffeln, bereitgestellt werden.

Der Kali-Dünger kann beispielsweise zwischen 40 % und 60 %, vorzugsweise 50 %, K2O und zwischen 35 % und 55 %, vorzugsweise 45 %, SO3 aufweisen.

Ein Kali-Dünger mit 50 % K2O und 45 % SO3 ist auch als KALISOP® im Markt bekannt und beispielsweise für Gemüse, z.B. Kartoffeln, geeignet.

Das Düngemittel kann beispielsweise wasserlöslichen Schwefel, Elementarschwefel, Meerkalk und KALISOP® aufweisen. Ferner kann stabilisierter Stickstoff im Düngemittel enthalten sein.

Insbesondere kann der Kali-Dünger als Granulat vorliegen. Er lässt sich somit gut mit anderen Bestandteilen des Düngemittels mischen.

Vorzugsweise ist der Kali-Dünger vollständig wasserlöslich, sodass die Nährstoffe Kalium und Schwefel unmittelbar für die Pflanze verfügbar sind.

Alternativ oder zusätzlich zu einem Stickstoff-Dünger, Magnesium-Dünger, Phosphat-Dünger oder Kali-Dünger kann das Düngemittel auch einen Phosphat-Kali-Dünger umfassen.

Insbesondere weist der Phosphat-Kali-Dünger wasserlöslichen Schwefel auf. Durch eine Kombination eines derartigen Phosphat-Kali-Düngers mit einem Elementarschwefel-Dünger können somit sowohl wasserlöslicher Schwefel als auch der Elementarschwefel bereitgestellt werden.

Gemäß einer weiteren Ausführungsform umfasst der Phosphat-Kali-Dünger zwischen 1 % und 10 %, vorzugsweise 4 %, wasserlöslichen Schwefel. Insbesondere kann der Phosphat-Kali-Dünger einen Anteil zwischen 5 % und 15 %, vorzugsweise 7,5 %, Phosphor aufweisen. Der Anteil an Kalium kann zwischen 30 % und 50 %, vorzugsweise 40 %, liegen. Ferner kann Calciumoxid enthalten sein, insbesondere mit einem Anteil zwischen 5 % und 20 %, vorzugsweise 10,8 %.

Ein Phosphat-Kali-Dünger kann beispielsweise 7,5 % Phosphor, 40 % Kalium, 4 % Sulfat und 10,8 % Calciumoxid aufweisen.

Der Anteil an Phosphat-Kali-Dünger im Düngemittel kann - falls überhaupt vorhanden - zwischen 15 % und 50 %, insbesondere zwischen 20 % und 45 %, betragen.

Nach einer weiteren Ausführungsform umfasst das Düngemittel Bentonit. Das Bentonit kann beispielsweise in einem Elementarschwefel-Dünger, welcher den Elementarschwefel umfasst, enthalten sein. Der Anteil an Bentonit im Elementarschwefel-Dünger kann zwischen 5 % und 15 %, insbesondere 10 %, betragen.

Bentonit bildet z.B. Ton-Humus-Komplexe, welche das Bodengefüge stabilisieren und die Bodenfruchtbarkeit erhöhen.

Ein granulierter Elementarschwefel-Dünger mit 90 % Elementarschwefel und 10 % Bentonit ist z.B. als Schwedokal® 90 bekannt. Schwedokal® 90 ist bio-geeignet.

Der Anteil an Schwedokal® 90 im Düngemittel kann zwischen 2 % und 20 %, insbesondere zwischen 3 % und 13 % betragen.

Gemäß einer weiteren Ausführungsform umfasst das Düngemittel einen Harnstoff-Dünger mit Nitrifikationshemmstoff.

Der Korndurchmesser des Harnstoff-Düngers kann im Mittel zwischen etwa 2 mm und 4 mm liegen. Insbesondere können erfindungsgemäß somit ein Stickstoff-, Magnesium-, Phosphat-, Kali- und/oder Phosphat-Kali-Dünger mit einem Elementarschwefel-Dünger und Rohphosphat sowie einem Harnstoff-Dünger mit Nitrifikationshemmstoff kombiniert werden. So kann die Pflanze durch ein einmaliges Düngen mit wichtigen Nährstoffen versorgt werden.

Ebenso wie wasserlöslicher Schwefel kann sich auch Nitratstickstoff nicht in der Bodenkrume halten und wird ausgewaschen.

Mit dem Harnstoff-Dünger mit Nitrifikationshemmstoff lassen sich die Vorteile der Ammoniumform hingegen voll nutzen. Der Harnstoff wird in kurzer Zeit nach Ausbringung und Erreichen einer bestimmten Bodentemperatur in Ammoniumstickstoff umgewandelt. Der Ammoniumstickstoff wird stabilisiert und dessen mikrobielle Umwandlung zu Nitrat deutlich verzögert. Auf diese Weise wird ein vor Verlagerung geschützter Vorrat an Ammonium im Boden angelegt. Da Pflanzen Ammonium ebenso gut wie Nitrat aufnehmen können, kommt es zu einer vom Pflanzenwachstum bedarfsgerecht gesteuerten ammoniumbetonten Ernährung. Höhere Mengen an Stickstoff können so beim Düngen ohne Gefahr von Luxuskonsum ausgebracht werden. Ein mehrmaliges Düngen ist nicht erforderlich.

Die Düngung wird zudem vereinfacht und kann variabler gestaltet werden, zumal stabilisierter Stickstoff sicher und unabhängig vom Wetter wirkt. Auch bei hohen Niederschlägen nach der Düngung ist dieser somit vor Auswaschungen geschützt.

Eine Kombination eines Stickstoff-Düngers mit einem Elementarschwefel-Dünger und Rohphosphat sowie einem Harnstoff-Dünger mit Nitrifikationshemmstoff ermöglicht somit ein Bereitstellen von stabilisiertem Stickstoff und eine stetige Schwefelzufuhr während einer vollständigen Vegetationsperiode. Ein mehrmaliges Düngen entfällt. Die Pflanze kann ab Vegetationsbeginn bis z.B. zur Kornreife im Mais oder Raps bzw. bis zum Ährenschieben im Getreide mit Stickstoff, Schwefel und Rohphosphat versorgt werden.

Gemäß einer weiteren Ausführungsform umfasst der Harnstoff-Dünger 46 % Carbamidstickstoff. Ein derartiger Harnstoff-Dünger mit Nitrifikationshemmstoff ist auch als Alzon® 46 bekannt.

Insbesondere kann der Anteil an Harnstoff-Dünger mit Nitrifikationshemmstoff - falls überhaupt vorhanden - im Düngemittel zwischen 5 % und 20 %, insbesondere zwischen 10 % und 15 %, betragen.

Der Nitrifikationshemmstoff kann Dicyandiamid, Triazol, insbesondere 1,2,3 Triazol oder 1,2,4 Triazol, Allylthioharnstoff und/oder Nitrapyrin umfassen bzw. daraus bestehen. Insbesondere kann der Nitrifikationshemmstoff als Gemisch aus Dicyandiamid und 1H-1,2,4 Triazol ausgebildet sein.

Diese Nitrifikationshemmstoffe weisen gute Hemmeigenschaften auf.

Nach einer weiteren Ausführungsform umfasst das Düngemittel einen Kalkstickstoff-Dünger. Kalkstickstoff wird auch Calciumcyanamid (CaCN2) genannt. Hierbei handelt es sich um einen stabilisierten Dünger. Der Kalkstickstoff-Dünger kann Nitratstickstoff, Cyanamidstickstoff, Dicyandiamidstickstoff und/oder Kalk umfassen oder daraus bestehen.

Insbesondere enthält der Kalkstickstoff-Dünger zwischen 15 % und 25 %, vorzugsweise 19,8 %, Stickstoff. Davon kann der Anteil an Nitratstickstoff zwischen 1 % und 3 %, vorzugsweise 1,8 % betragen. Der Anteil an Cyanamidstickstoff kann mindestens 10 %, vorzugsweise mindestens 15 %, betragen, während der Anteil an Dicyandiamidstickstoff bei etwa 0,5 % liegen kann. Der Kalkgehalt (CaO) kann mindestens 40 %, vorzugsweise mindestens 50 %, betragen.

Ein Kalkstickstoff-Dünger mit einem Stickstoffanteil von 19,8 % und einem Kalkgehalt von mindestens 50 % ist auch als PERLKA® am Markt bekannt.

Der Kalkstickstoff-Dünger kann als Granulat vorliegen. Der Korndurchmesser kann im Mittel zwischen etwa 0,8 und 3,5 mm liegen. Ferner ist dieser umweltverträglich und kann für verschiedene Zwecke eingesetzt werden.

Pflanzen werden mit Stickstoff versorgt, während dem Boden Kalk zugeführt wird. Durch das Calciumcyanamid wird die mikrobiologische Aktivität im Boden erhöht.

So kann als stabilisierender Stickstoff neben bzw. zusätzlich zu Alzon® auch beispielsweise Perlka® verwendet werden.

Nach einer weiteren Ausführungsform umfasst das Düngemittel einen Diammoniumphosphat-Dünger, insbesondere wobei der Diammoniumphosphat-Dünger 18 % Stickstoff und 46 % Phosphor umfasst und/oder wobei der Anteil an Diammoniumphosphat-Dünger im Düngemittel - falls überhaupt vorhanden - zwischen 5 % und 20 %, insbesondere zwischen 10 % und 18 %, beträgt.

Der Diammoniumphosphat-Dünger kann als (NH4)2HPO4 ausgebildet sein.

Insbesondere liegt das Diammoniumphosphat (DAP) als Granulat vor. Der Korndurchmesser kann im Mittel zwischen etwa 2 bis 5 mm liegen.

Insbesondere können erfindungsgemäß somit ein Stickstoff-, Magnesium-, Phosphat-, Kali- und/oder Phosphat-Kali-Dünger mit einem Elementarschwefel-Dünger und Rohphosphat sowie einem Diammoniumphosphat-Dünger kombiniert werden. Zudem kann ein Kalkstickstoff-Dünger und/oder Harnstoff-Dünger mit Nitrifikationshemmstoff vorgesehen sein. So kann die Pflanze durch ein einmaliges Düngen mit wichtigen Nährstoffen versorgt werden.

Vorzugsweise liegt zumindest ein Teil des Stickstoffs in Ammonium-Form vor und wird somit nicht ausgewaschen. Ferner wird die Aufnahme von Phosphat unterstützt und einer übermäßigen Aufnahme von Kalium aus dem Boden entgegengewirkt.

Insbesondere kann auch wenigstens ein Teil des Phosphors in Ammoniumphosphat-Form vorliegen, welcher für den Boden besser assimilierbar ist.

Gemäß einer weiteren Ausführungsform umfasst das Düngemittel einen Mikronährstoff-Dünger, insbesondere wobei der Anteil des Mikronährstoff-Düngers im Düngemittel - falls überhaupt vorhanden - zwischen 2 % und 20 %, insbesondere zwischen 4 % und 15 %, vorzugsweise 13,5 %, beträgt.

Mikronährstoffe werden von Pflanzen zwar nur in geringen Mengen benötigt. Jedoch sind diese beispielsweise für die Funktion und den Aufbau von Fermenten sowie Enzymen wichtig. Unterschiedliche Mikronährstoffe sollten daher für die Pflanzen zur Verfügung stehen.

Trockenheit sowie der pH-Wert können die Aufnahme von pflanzenverfügbaren Mikronährstoffen aus dem Boden beeinträchtigen. Bei hohen pH-Werten sind beispielsweise Mangan, Bor, Zink und Kupfer schlecht verfügbar, während Molybdän bei niedrigen pH-Werten nur unzureichend von der Pflanze aufgenommen werden kann.

Bisher wurden Mikronährstoffe vor allem in flüssiger Form auf das Feld gespritzt. Erfindungsgemäß können die Mikronährstoffe einen Teil des Düngemittels bilden und zusammen mit anderen Düngerbestandteilen auf das Feld ausgetragen werden.

Auf diese Weise kann ein zusätzlicher Arbeitsschritt eingespart werden, wodurch Kosten reduziert werden.

Der Mikronährstoff-Dünger kann als Granulat vorliegen und lässt sich somit gut mit anderen Bestandteilen des Düngemittels mischen.

Gemäß einer Ausführungsform umfasst der Mikronährstoff-Dünger Bor, Zink, Mangan, Selen, Kobalt, Molybdän, Kupfer und/oder Eisen. Ferner können Magnesium, Calcium, Natrium und/oder Schwefel enthalten sein. Die Pflanze kann dadurch ausreichend mit einem oder mehreren unterschiedlichen Mikronährstoff/en versorgt werden.

Bei einem Mangel an Bor bleibt die Pflanze beispielsweise in der Entwicklung stehen und wächst nur langsam. Bor kann beispielsweise bei Düngemitteln für Gemüse, z.B. Kartoffeln, Raps, Mais und/oder Soja zugesetzt werden.

Zink und Kupfer beeinflussen die Vitalität und Standfestigkeit einer Pflanze positiv. Zink ist für das Pflanzenwachstum sowie für verschiedene Stoffwechselprozesse unentbehrlich. Auch ist Zink wichtig für die Fruchtbarkeit, Abwehrkräfte und die Verdauung von mit den Pflanzen gefütterten Tieren.

Kupfer ist wichtig für die Blut- und Knochenbildung von mit den Pflanzen gefütterten Tieren.

Mangan unterstützt die Pflanze bei der Photosynthese und fördert die Wurzelentwicklung.

Ein Mangel an Selen kann bei Menschen und Tieren zu Erkrankungen führen, beispielsweise zu Arrhythmien, Herzversagen, Lungenödemen, Fruchtbarkeitsproblemen und/oder Schilddrüsenentzündungen. Selen wird vom Menschen vorwiegend über tierische Nahrungsmittel aufgenommen, da pflanzliche Nahrungsmittel vergleichsweise wenig Selen aufweisen. Durch eine Düngung mit Selen kann auch dessen Anteil in pflanzlichen Nahrungsmitteln deutlich erhöht werden.

Selen kann auch bei Düngemitteln für Wiesen und Weiden eingesetzt werden, um die damit gefütterten Tiere, z.B. Rinder und/oder Pferde, mit Selen zu versorgen.

Selen ist auch bio-geeignet.

Kobalt ist ein wichtiger Bestandteil des Vitamins B12 und von Enzymen. Ein Mangel führt zu Fortpflanzungsstörungen von mit den Pflanzen gefütterten Tieren.

Molybdän ist für verschiedene Stoffwechselfunktionen sowie die Stickstoffverwertung der Pflanze wichtig.

Am Markt ist beispielsweise EXCELLO® 331 bekannt. Dieser Mikronährstoff-Dünger umfasst 3,0 % Mangan, 3,0 % Zink, 1,0 % Bor, 11,8 % Magnesiumoxid, 29,3 % Calciumoxid, 0,005 % wasserlösliches Molybdän sowie 0,003 % Kobalt.

Zudem ist am Markt z.B. Excello® Weide bekannt. Dieser Mikronährstoff-Dünger umfasst 2,0 % Eisen, 1,5 % Zink, 1,0 % Mangan, 0,5 % Kupfer, 15,0 % Natriumchlorid, 3,0 % Schwefel, 0,003 % Kobalt, 0,006 % Selen, 7,9 % Magnesiumoxid sowie 25,0 % Calciumoxid.

Daneben sind von ICL Fertilizers beispielsweise Granulare N und P (GNP) Dünger bekannt. Beispielsweise kann dieser Mikronährstoffdünger eine Zusammensetzung von 11,5 % Stickstoff, 2,5 % Phosphor und 2,2 % Bor aufweisen. Auch ein höherer Anteil an Phosphor von z.B. 5,5 % ist möglich.

Zusätzlich kann auch Schwefel, beispielsweise mit einem Anteil von 15 %, vorgesehen sein. Damit ergibt sich ein Mikronährstoffdünger mit 11,5 % Stickstoff, 5,5 % Phosphor, 15 % Schwefel und 2,2 % Bor.

Gemäß einer weiteren Ausführungsform weist das Düngemittel einen Schneckenköder auf.

Schnecken können die Pflanzen angreifen, sobald diese auflaufen. Unter Auflaufen versteht man den Zeitpunkt, bei dem die Pflanzenkeimlinge entstehen und aus dem Boden wachsen.

Dieser Zeitpunkt ist besonders kritisch, da der Pflanzenkeimling sehr stark geschädigt werden kann, was schließlich zu beträchtlichen Ernteeinbußen führt. Beispielsweise können kleine Raps-Pflanzen von Schnecken befallen werden.

Es wird daher Schneckenköder auf das Feld ausgebracht. Dies geschieht bisher unabhängig von der Düngung des Feldes.

Erfindungsgemäß kann der Schneckenköder als Granulat, insbesondere Schneckenkorn, ausgebildet sein. Der Schneckenköder kann somit einen Bestandteil des Düngemittels bilden und mit diesem ausgetragen werden. Ein zusätzlicher Arbeitsschritt zum Ausbringen des Schneckenköderst ist somit nicht notwendig, wodurch Kosten reduziert werden können. Vorzugsweise wird das Düngemittel im Spätsommer bzw. Herbst, z.B. im August, ausgetragen.

Mischungen, bei denen ein Dünger mit Schneckenköder versehen ist, sind bisher nicht bekannt, da sich vor allem die exakte Dosierung als aufwändig erweist. So sollte der Anteil an Schneckenköder aufgrund der vergleichsweise hohen Kosten einerseits möglichst gering gehalten werden. Andererseits muss der Anteil hoch genug sein, um einen spürbaren Schutz vor Schnecken zu gewährleisten.

Es war überraschend, dass mittels eines Dosiermischers ein wirkungsvolles Düngemittel gemischt werden kann, welches unter Vermeidung von unnötigen Kosten für überzähligen Schneckenköder einen optimalen Schutz vor Schnecken ermöglicht.

Gemäß einer Ausführungsform beträgt der Anteil an Schneckenköder im Düngemittel - falls überhaupt vorhanden - zwischen 1 % und 6 %, insbesondere zwischen 3 % und 4 %, vorzugsweise 3,7 %. Ohne unnötig viel Schneckenköder einzusetzen, können die Pflanzen somit vor Schnecken geschützt werden.

Werden beispielsweise 150 kg Düngemittel pro Hektar ausgebracht, können darin rund 2 bis 8 kg, z.B. 5 kg, Schneckenköder enthalten sein.

Mittels eines Dosiermischers ist es möglich, exakt den gewünschten Anteil an Schneckenköder beizumischen.

Nach einer weiteren Ausführungsform umfasst der Schneckenköder Metaldehyd, Eisen-III-Phosphat und/oder Methiocarb.

Der Schneckenköder kann beispielsweise 2 bis 5 Gramm pro Kilogramm Metaldehyd aufweisen.

Ein Schneckenköder mit 3 g/kg Metaldehyd ist z.B. als Spiess-Urania® G2 im Markt bekannt. Ein Schneckenköder mit 4 g/kg Metaldehyd ist als METAREX INOV® verfügbar.

Ferner kann der Schneckenköder beispielsweise 5 bis 15 Gramm pro Kilogramm Eisen-III-Phosphat aufweisen. Ein Schneckenköder mit 9,9 g/kg ist auch als Ferramol® bekannt. Ein Schneckenköder mit Eisen-III-Phosphat ist bio-geeignet und schont z.B. Regenwürmer, Igel und Bienen.

Ein Schneckenköder mit Methiocarb ist beispielsweise als Mesurol® bekannt.

Gemäß einer weiteren Ausführungsform umfasst der Schneckenköder einen Sexuallockstoff. Der Schneckenköder wirkt dadurch besser, da die Schnecken stärker angelockt werden.

Beispielsweise ist in METAREX INOV® ein Sexuallockstoff vorhanden.

Alle hier beschriebenen Aspekte, Ausführungsformen und Merkmale der Erfindung können, insbesondere auch losgelöst von der konkreten Ausgestaltung, in deren Zusammenhang sie erwähnt werden, jeweils miteinander kombiniert werden. Insbesondere können alle Gegenstände der abhängigen Ansprüche untereinander und mit jedem Gegenstand der unabhängigen Ansprüche kombiniert werden.

Die Erfindung wird im Folgenden anhand möglicher Düngemittel beispielhaft beschrieben.

Ein erstes Düngemittel, insbesondere zum Einsatz im Bio-Bereich, kann beispielsweise Kieserit, Schwedokal® 90, Meerkalk und Rohphosphat, z.B. Hyperkorn P26, enthalten. Die jeweiligen Anteile können grundsätzlich beliebig gewählt werden.

Insbesondere kann das Düngemittel z.B. 17 % Kieserit, 9,8 % Schwedokal® 90, 11,2 % Meerkalk und 62 % Hyperkorn P26 enthalten.

Ein zweites Düngemittel, insbesondere zum Einsatz für Wiesen und/oder Weiden im Bio-Bereich, kann beispielsweise Kieserit, Schwedokal® 90, Excello® Weide, Kalisulfat mit 50 % Kalium und 17 % Sulfat, Auftausalz mit einem Natrium-Anteil von mindestens 98 % und Rohphosphat, z.B. Hyperkorn P26, enthalten. Die jeweiligen Anteile können grundsätzlich beliebig gewählt werden.

Insbesondere kann das Düngemittel z.B. 6 % Kieserit, 5,3 % Schwedokal® 90, 13,5 % Excello® Weide, 24 % Kalisulfat, 6,6 % Auftausalz und 39 % Hyperkorn P26 enthalten.

Ein drittes Düngemittel, insbesondere zum Einsatz für Wiesen und/oder Weiden im Bio-Bereich, kann beispielsweise Kieserit, Schwedokal® 90, Excello® Weide, Meerkalk, Auftausalz mit einem Natrium-Anteil von mindestens 98 % und Rohphosphat, z.B. Hyperkorn P26, enthalten. Die jeweiligen Anteile können grundsätzlich beliebig gewählt werden.

Insbesondere kann das Düngemittel z.B. 15 % Kieserit, 6,5 % Schwedokal® 90, 13,5 % Excello® Weide, 12 % Meerkalk, 6,8 % Auftausalz und 46,2 % Hyperkorn P26 enthalten.

Ein viertes Düngemittel, insbesondere zum Einsatz für Wiesen und/oder Weiden, kann beispielsweise Alzon® 46, Diammoniumphosphat mit 18 % Stickstoff und 46 % Phosphor, einen Phosphat-Kali-Dünger mit 7,5 % Phosphor, 40 % Kalium, 4 % Sulfat und 10,8 % Calciumoxid, Kieserit, Schwedokal® 90, Excello® Weide, Meerkalk und Auftausalz enthalten. Die jeweiligen Anteile können grundsätzlich beliebig gewählt werden.

Insbesondere kann das Düngemittel z.B. 11 % Alzon® 46, 11,2 % Diammoniumphosphat, 25 % Phosphat-Kali-Dünger, 13 % Kieserit, 4,8 % Schwedokal® 90, 8,5 % Excello® Weide, 19,5 % Meerkalk und 7 % Auftausalz enthalten.

Ein fünftes Düngemittel, insbesondere für Braugerste, kann beispielsweise Alzon ® 46, Diammoniumphosphat mit 18 % Stickstoff und 46 % Phosphor, einen Phosphat-Kali-Dünger mit 7,5 % Phosphor, 40 % Kalium, 4 % Sulfat und 10,8 % Calciumoxid, Kieserit, Schwedokal® 90 und Meerkalk enthalten. Die jeweiligen Anteile können grundsätzlich beliebig gewählt werden.

Insbesondere kann das Düngemittel z.B. 13,1 % Alzon® 46, 11 % Diammoniumphosphat, 40 % Phosphat-Kali-Dünger, 17,5 % Kieserit, 3,4 % Schwedokal® 90 und 15 % Meerkalk enthalten.

Ein sechstes Düngemittel, insbesondere für Soja, kann beispielsweise Diammoniumphosphat mit 18 % Stickstoff und 46 % Phosphor, einen Phosphat-Kali-Dünger mit 7,5 % Phosphor, 40 % Kalium, 4 % Sulfat und 10,8 % Calciumoxid, Kieserit, Schwedokal® 90, Meerkalk und Rohphosphat, z.B. Hyperkorn P26, enthalten. Die jeweiligen Anteile können grundsätzlich beliebig gewählt werden.

Insbesondere kann das Düngemittel z.B. 17,62 % Diammoniumphosphat, 37,5 % Phosphat-Kali-Dünger, 11,3 % Kieserit, 9,15 % Schwedokal® 90, 16,4 % Meerkalk und 8 % Hyperkorn P26 enthalten.

Sämtliche Bestandteile des Düngemittels können als Granulat vorliegen. Verschiedenste Dünger lassen sich somit gut zu einem neuen Düngemittel mischen. Um die Anteile der einzelnen Dünger am Düngemittel möglichst exakt zu mischen, kann ein Dosiermischer verwendet werden.

Die angegebenen %-Angaben betreffen jeweils die Gewichts%.

## Patentansprüche

1. Düngemittel, umfassend
Elementarschwefel und
Rohphosphat.

2. Düngemittel nach Anspruch 1,
**gekennzeichnet durch**
einen Mikronährstoff-Dünger, insbesondere wobei der Anteil des Mikronährstoff-Düngers im Düngemittel zwischen 2 % und 20 %, insbesondere zwischen 4 % und 15 %, vorzugsweise 13,5 %, beträgt.

3. Düngemittel nach Anspruch 2,
**dadurch gekennzeichnet,**
**dass** der Mikronährstoff-Dünger Bor, Zink, Mangan, Selen, Kobalt, Molybdän, Kupfer und/oder Eisen umfasst.

4. Düngemittel nach einem der vorhergehenden Ansprüche,
**gekennzeichnet durch**
wasserlöslichen Schwefel, insbesondere Schwefelsulfat.

5. Düngemittel nach einem der vorhergehenden Ansprüche,
**gekennzeichnet durch**
Meerkalk, insbesondere Korallen-, Algen- und/oder Muschelkalk.

6. Düngemittel nach Anspruch 5,
**dadurch gekennzeichnet,**
**dass** der Anteil an Meerkalk im Düngemittel zwischen 5 % und 80 %, insbesondere zwischen 10 % und 20 %, beträgt.

7. Düngemittel nach einem der vorhergehenden Ansprüche,
**gekennzeichnet durch**
einen Stickstoff-Dünger, einen Magnesium-Dünger, einen Phosphat-Dünger, einen Kali-Dünger und/oder einen Phosphat-Kali-Dünger.

8. Düngemittel nach Anspruch 7,
**dadurch gekennzeichnet,**
**dass** der Magnesium-Dünger zwischen 15 % und 30 %, insbesondere 25 %, Magnesiumoxid und zwischen 10 % und 25 %, insbesondere 20 %, wasserlöslichen Schwefel umfasst.

9. Düngemittel nach Anspruch 7 oder 8,
**dadurch gekennzeichnet,**
**dass** der Kali-Dünger chloridfrei ist oder maximal 1 % Chlorid enthält.

10. Düngemittel nach einem der vorhergehenden Ansprüche,
**dadurch gekennzeichnet,**
**dass** das Düngemittel Bentonit aufweist.

11. Düngemittel nach einem der vorhergehenden Ansprüche,
**gekennzeichnet durch**
einen Harnstoff-Dünger mit Nitrifikationshemmstoff, insbesondere wobei der Harnstoff-Dünger 46 % Carbamidstickstoff umfasst und/oder wobei der Anteil an Harnstoff-Dünger mit Nitrifikationshemmstoff im Düngemittel zwischen 5 % und 20 %, insbesondere zwischen 10 % und 15 %, beträgt.

12. Düngemittel nach Anspruch 11,
**dadurch gekennzeichnet,**
**dass** der Nitrifikationshemmstoff Dicyandiamid, Triazol, Allylthioharnstoff und/oder Nitrapyrin umfasst.

13. Düngemittel nach einem der vorhergehenden Ansprüche,
**gekennzeichnet durch**
einen Kalkstickstoff-Dünger, insbesondere wobei der Kalkstickstoff-Dünger zwischen 15 % und 25 %, vorzugsweise 19,8 %, Stickstoff enthält.

14. Düngemittel nach einem der vorhergehenden Ansprüche,
**gekennzeichnet durch**
einen Diammoniumphosphat-Dünger, insbesondere wobei der Diammoniumphosphat-Dünger 18 % Stickstoff und 46 % Phosphor umfasst und/oder wobei der Anteil an Diammoniumphosphat-Dünger im Düngemittel zwischen 5 % und 20 %, insbesondere zwischen 10 % und 18 %, beträgt.

15. Düngemittel nach einem der vorhergehenden Ansprüche,
**dadurch gekennzeichnet,**
**dass** das Düngemittel einen Schneckenköder aufweist.
